# EUROPEAN PATENT APPLICATION

(11) **EP 3 705 359 A1**
(43) Date of publication of application: **09.09.2020**
(21) Application number: 18873527.8
(22) Date of filing: 09.02.2018
(51) Int. Cl.: B60S 5/06

(54) **BATTERY SWAP SYSTEM**

(30) Priority: 30.10.2017 CN 201711035516
(71) Applicant: NIO Nextev Limited, Central, Hong Kong (HK)
(72) Inventor: DING, Xikun, Hong Kong (CN); TIAN, Xiaotao, Hong Kong (CN); LI, Nan, Hong Kong (CN); BENGTSSON, Jan, Hong Kong (CN)
(74) Representative: Vossius & Partner Patentanwälte Rechtsanwälte mbB
(86) International application number: PCT/CN2018/076020
(87) International publication number: WO 2019/085326

(57) **Abstract**

A battery swap system comprises a battery swap executing mechanism (20), the battery swap executing mechanism (20) comprising: an elevatable support device (21); a conveying device (23) for battery exchange, the conveying device (23) having a first surface (a) for making contact with a battery; and a floating device (25), the floating device (25) having a second surface (b) provided with a battery locking/unlocking device (26), the floating device (25) being mounted on the support device (21) in a suspended manner and being able to at least horizontally float relative to the support device (21), wherein the floating device (25) has a space for elevation relative to the conveying device (23), such that the first surface (a) is higher than the second surface (b) when the conveying device (23) makes contact with the battery, and the second surface (b) is higher than the first surface (a) when the floating device (25) locks/unlocks the battery. The invention allows fast and automated battery swapping for a vehicle, is applicable to small places and can be modularly extended to applications where there are a large number of battery swapping requests.

## Description

### Technical Field

The invention relates to the field of battery swap services, and in particular to a battery swap system.

### Background Art

A battery swap system for a battery pack swap for an electric vehicle is an automated battery swap trolley of a rail guided type. Generally, an electric vehicle which requires a battery swap is lifted to a certain height above the ground, and the trolley moves along a track rail to an area below the vehicle. Firstly, the angle of the trolley is adjusted as a function of the direction of the battery; then the trolley is lifted to approach the battery, and the relative position of the trolley with respect to the battery is fixed; then the trolley removes the battery from the vehicle, descends with the battery, moves away from the vehicle along the track rail, and moves to a battery storage station to swap the battery for a fresh battery; and finally, the trolley moves to an area below the lifted vehicle again, repeats the foregoing actions, and installs the fresh battery onto the vehicle.

Positioning precision and battery swap time are important factors for evaluating the performance of the battery swap trolley and the quality of a battery swap service.

### Summary of the Invention

One aspect of the invention is to provide a battery swap system, comprising:
a battery swap executing mechanism, the battery swap executing mechanism comprising:
   an elevatable support device;
   a conveying device for battery exchange, the conveying device having a first surface for making contact with a battery; and
   a floating device, having a second surface provided with a battery locking/unlocking device, the floating device being mounted on the support device in a suspended manner and being able to at least horizontally float relative to the support device, wherein
the floating device has a space for elevation relative to the conveying device, such that the first surface is higher than the second surface when the conveying device makes contact with the battery, and the second surface is higher than the first surface when the floating device locks/unlocks the battery.

In the above battery swap system, the support device comprises a first elevatable top plate, the floating device comprises a second bottom plate and a second top plate fixed on the second bottom plate, and the second bottom plate is suspended on the first top plate; and the conveying device is disposed between the second bottom plate and the second top plate in an elevation direction, and the second top plate serves as the second surface.

In the above battery swap system, the conveying device comprises at least one roller array, the roller array being formed by a plurality of pivotable rollers; and a notch exposing the roller array is provided on the second top plate at a position corresponding to the roller array, and when the floating device ascends or descends relative to the conveying device, the roller array switches between a state of being higher than the second top plate and a state of being lower than the second top plate by means of the notch.

In the above battery swap system, the battery locking/unlocking device is a torque gun device, which comprises a torque gun and a socket driven by the torque gun to rotate, wherein the torque gun is disposed on the side of the second top plate that faces the second bottom plate and protrudes out of the second top plate, and the socket is fixed to the side of the second top plate that faces away from the second bottom plate and is in transmission connection with the torque gun.

In the above battery swap system, the conveying device has a bottom surface facing the first top plate and support legs provided on the bottom surface, and the first top plate is elevatable relative to the bottom surface;
when the support device is at a lowermost position, the conveying device is supported on the support device by means of the support legs, so that the first top plate is separated from the bottom surface, and then the first surface is higher than the second surface; and when the support device ascends, the first top plate ascends along with the support device until making contact with the bottom surface so as to drive the conveying device to ascend synchronously, and then the second surface is higher than the first surface.

In the above battery swap system, the first top plate is provided with first posts, the conveying device is provided with guide mechanisms, the guide mechanisms provide holes for the first posts to pass through, the first posts move in the holes when the floating device ascends or descends relative to the conveying device, and the first posts stand still relative to the holes when the conveying device ascends or descends along with the floating device.

In the above battery swap system, the first top plate is provided with second posts, and the second bottom plate is suspended on the second posts, so that the floating device floats relative to the battery when the floating device is calibrated to be in a position relative to the battery.

In the above battery swap system, a space exists between the second bottom plate and the second top plate, the second bottom plate and the second top plate are connected by third posts therebetween, and a controller for controlling the battery locking/unlocking device is located in the space.

In the above battery swap system, the second bottom plate is provided with fourth posts, the fourth posts are each provided at the top with a pallet, the second top plate is provided with openings for the pallets to pass through, and the pallets are configured to be at least partially higher than the second top plate.

In the above battery swap system, the pallets are elastically connected to the fourth posts, so that the pallets float in a horizontal direction relative to the fourth posts and the openings.

In the above battery swap system, the battery swap system further comprises into-position switches for detecting an amount of elastic displacement of the pallets bearing a battery.

In the above battery swap system, the support device is driven by a rigid chain driven motor unit arranged outside the battery swap system.

In the above battery swap system, the rigid chain driven motor unit is a servo motor, which records a lifting height of the support device bearing a battery after the floating device is positionally calibrated, for the next lift of the support device.

In the above battery swap system, the battery swap system further comprises at least one track rail and a walking mechanism along with which the battery swap executing mechanism moves, and the walking mechanism movably walks on the track rail by means of a bearing.

In the above battery swap system, the walking mechanism further comprises a driving member and a transmission device connected to the driving member, the transmission device adopts gear-rack transmission, power output by the driving member is transmitted to the rack through the gear, and the rack is arranged to be substantially parallel to the track rail.

After entering a lifting station, the battery swap system can directly lift the battery swap executing mechanism for a battery swap without the need of directional adjustment, thus simplifying the operation and shortening the battery swap time.

The battery swap system is driven by the servo motor and the gear and rack to walk on the track rail, providing stable transmission and high precision while preventing wear and skid. This facilitates both the transportation of batteries and the positioning of the battery swap system in subsequent steps.

Some important auxiliary mechanisms, such as the rigid chain driven motor unit, are arranged outside the system, and therefore are easy to install and maintain.

The battery swap executing mechanism for bearing the battery has a floating component, and pins are designed to readily enter pin holes on the battery, thus making it convenient to calibrate the relative position of the battery swap executing mechanism with respect to the battery, and reducing external force and wear to a great extent.

The battery swap executing mechanism makes use of a clearance for the arrangement of the torque gun device and the relevant controllers, thereby facilitating spatial layout and the reliable installation of these devices.

The battery swap system of the application can move to and from the lifting station and a battery compartment to allow fast and automated battery swapping for a vehicle, is applicable to small places and can be modularly extended to applications where there are a large number of battery swapping requests.

Other aspects and features of the present application will become apparent from the following detailed description made with reference to the accompanying drawings. However, it should be understood that the accompanying drawings are merely designed for the purpose of explanation, and are not intended to limit the scope of the application which should be subject to the appended claims. It should also be understood that the accompanying drawings are merely intended to conceptually illustrate the structures and processes described herein, and are not necessarily drawn to scale unless specifically indicated.

### Brief Description of the Drawings

The application will become more fully understood from the following detailed description made in conjunction with the accompanying drawings and with reference to specific embodiments, and the same reference numerals in the accompanying drawings always denote the same elements throughout the drawings. In the drawings:
Fig. 1 is a schematic structural diagram of a battery swap system according to an embodiment of the application,
Fig. 2 is a schematic structural diagram of the battery swap system in Fig. 1 bearing a battery pack,
Fig. 3 is an exploded diagram of the battery swap system in Fig. 1,
Fig. 4 is an exploded diagram, viewed from another angle, of the battery swap system in Fig. 1 comprising a battery pack, and
Fig. 5 is a schematic diagram of the battery swap system in a working state according to the application.

### Detailed Description of Embodiments

To help those skilled in the art to clearly understand the subject matter of the application, specific implementations of the application are described below with reference to the accompanying drawings.

An automated battery swap rail trolley involved in the invention, hereinafter referred to as a rail guided vehicle (RGV), is used for a battery pack swap of an electric vehicle. The RGV is a rail vehicle, which moves to and from a lifting station and a battery compartment along a track rail, wherein an electric vehicle with a battery pack to be swapped enters the lifting station. Herein, the battery pack can also be referred to as a battery, a battery module, etc., and is an integrated device for providing driving power to the electric vehicle. The RGV in a no-load state enters an area below the vehicle in the lifting station, removes a used battery pack from the vehicle, and transfers the used battery pack from the lifting station to the battery compartment. The used battery pack is replaced with a fresh battery pack in the battery compartment. The RGV carrying the fresh battery pack enters the lifting station again, and installs the fresh battery pack in the vehicle. The above work flow is automated, is applicable to small battery swap places and can provide a modularly extended battery swap service.

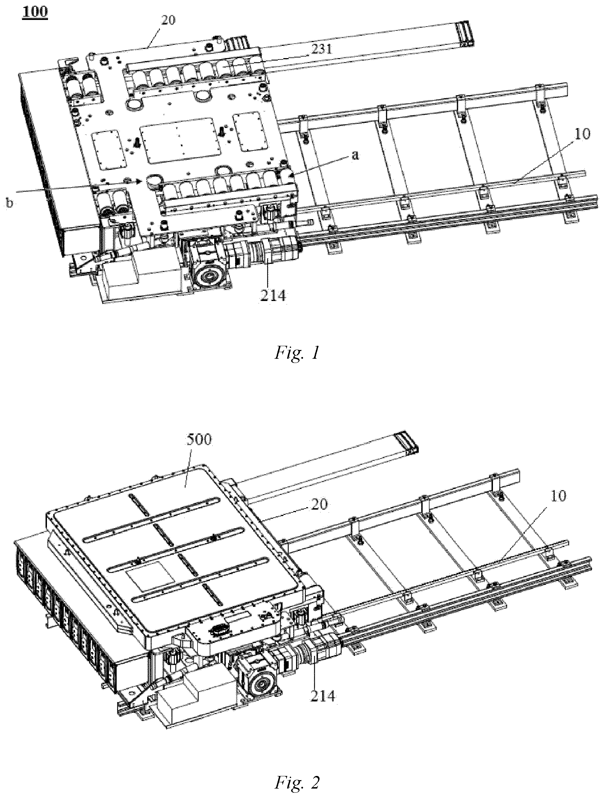

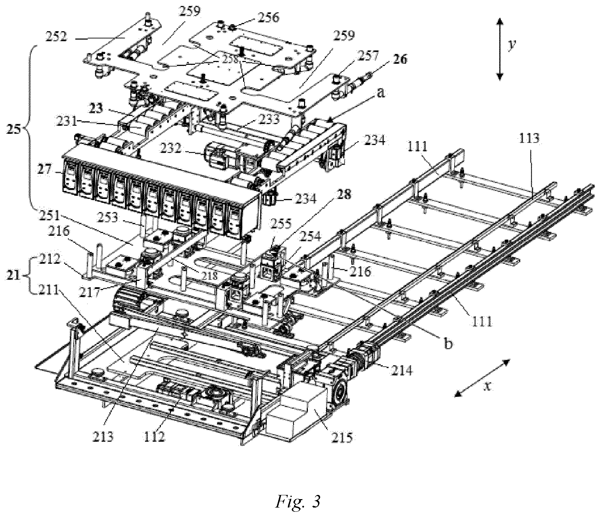

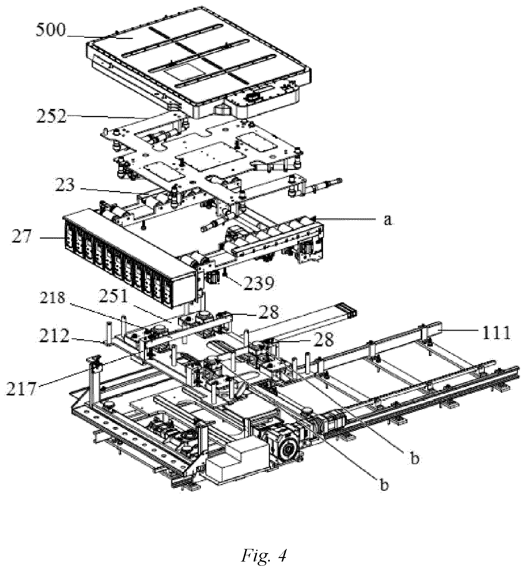

Referring to Figs. 1-4, an RGV 100 comprises track rails 111 arranged in a first direction *x*, a walking mechanism 10 and a battery swap executing mechanism 20. Specifically, referring to Figs. 3 and 4, the walking mechanism 10 comprises an electric motor 112, a gear (not indicated in the figures), a rack 113 and a bearing. The rack 113 substantially parallel to the track rails 111, i.e., extending in the first direction *x*, is arranged between the two track rails 111. The electric motor 112 is a driving servo motor of the RGV, and is connected to the gear. The gear meshes with the rack 113. The electric motor 112 is started to drive the gear, and by means of gear-rack transmission, wheels of the RGV move in the form of the bearing in the track rails 111. The battery swap executing mechanism 20 of the RGV movably walks on the track rails by means of the bearing, and moves in the first direction *x* between a lifting station and a battery compartment along the track rails 111. After entering the lifting station to an area below the vehicle along the track rails, the RGV can directly remove or install a battery pack without the need of directional adjustment. The RGV always remains in the direction of the battery pack during the entire battery swap process, bringing many advantages such as reducing the battery swap time and preventing an error caused by undue positioning of the battery pack.

The battery swap executing mechanism 20 comprises a support device 21, a conveying device 23 and a floating device 25. The battery swap executing mechanism can enable the conveying device 23 and the floating device 25 to ascend or descend in a second direction *y* by means of the support device 21, and the floating device 25 and the conveying device 23 can also ascend or descend relative to each other. Herein, the second direction *y* is a vertical direction (i.e. a height direction) as shown in the figures, and the first direction *x* is a transverse direction along a path connecting the lifting station and the battery compartment. The support device 21 comprises a first bottom plate 211, a first top plate 212 and an elevation driving member 213 between the first bottom plate 211 and the first top plate 212. The elevation driving member 213 may be scissors as shown in the figures, and under the action of the scissors, the first top plate 212 ascends or descends relative to the first bottom plate 211. The first bottom plate 211 is arranged on the ground and between the track rails 111. The support device 21 can be considered as a scissor lift platform as a whole.

The support device 21 is driven by a rigid chain driven motor unit 214 to ascend or descend, the rigid chain driven motor unit 214 being disposed at a side of the track rails 111. As can be seen from Figs. 1-3, with respect to the battery swap executing mechanism, the rigid chain driven motor unit 214 is disposed outside the battery swap executing mechanism, or even outside the entire RGV, thus facilitating the installation and maintenance of the rigid chain driven motor.

The conveying device 23 is used for transferring a battery pack between the RGV and the battery compartment or other battery pack storage equipment, with its transport direction matching a docking equipment. As an example, as shown in Figs. 3 and 4, the conveying device 23 can transport a battery pack in the first direction *x*. The conveying device 23 comprises two frames which are parallel to each other in the first direction *x* as shown in the figures. A roller array 231 consisting of a plurality of pivotable rollers is arranged in each of the frames. After the conveying device 23 is loaded with the battery pack, the battery pack makes contact with the top of the roller array 231, and the battery pack can move relative to the roller array 231. A surface, which makes contact with the battery and is used to bear and convey the battery, of the conveying device is formed on the surface of the roller array 231, and is defined as a first surface. The roller array 231 is driven by a driving unit 232. The driving unit 232 is, for example, an electric motor as shown in the figures. The electric motor drives, by means of a coupling shaft 233 connected between two roller arrays 231, the rollers in the roller arrays 231 to pivot for transmission movement. The battery pack can be transported in a forward or reverse direction in the first direction *x* by means of forward or reverse rotation of the electric motor. Definitely, it should be contemplated that, in addition to the arrangement of the driving unit, the roller arrays may also be used to transfer the battery pack in an unpowered manner, which requires manpower to move the battery pack into or out of the battery compartment.

The conveying device 23 moves in a stepped manner in the second direction y relative to the floating device 25. The floating device 25 is connected to the support device 21. The floating device and the support device will be further described below. Herein, what is called "moving in a stepped manner" means stepped movement of two devices relative to each other, wherein one can move independently of the other, and the one can also move together with the other. For example, one moves independently while the other keeps still for the moment; and then the one bears the other to move together or the two move at the same time. In the application, during the entire elevation process (ascending or descending), the floating device ascends or descends independently of the conveying device within a period of time, and ascends or descends together with the conveying device within another period of time. According to the embodiments shown in the figures, without specific limitation, in the lifting process of the battery swap executing mechanism, the floating device ascends first while the conveying device keeps still, and when the floating device ascends to a certain height, the floating device ascends together with the conveying device; and in the descending process of the battery swap executing mechanism, the floating device descends together with the conveying device, and when the conveying device descends to a certain height, the floating device continues to descend while the conveying device keeps still.

On the first top plate 211 of the support device 21, first posts 216 extending in the second direction y are disposed. As shown in the figures, four first posts 216 are arranged at four corners of the first top plate 212 (in Fig. 3, limited by the image display, only two diagonal first posts 216 are marked). Correspondingly, guide mechanisms 234 are disposed on an outer side of the frames of the conveying device 23. The guide mechanisms 234 are specifically four bearing blocks mounted to the frames, and provide therein holes for the first posts 216 to pass through. Therefore, after the first posts 216 pass through the bearing block, the first posts 216 can move in the holes in the second direction *y* relative to the holes, and after the first post mounting surface (i.e. the surface of the first top plate 212) ascends to make contact with the bearing block, it can be such that the first posts 216 and the bearing block, i.e. the first posts 216 (the support device 21 and the floating device 25) and the conveying device 23, move upward together. The movement relationship of the two may also be as follows: firstly, the bearing block (the conveying device 23) and the first posts 216 (the support device 21 and the floating device 25) move downward together, and when the conveying device 23 is restricted from continuing to move (as shown in Fig. 4, the conveying device 23 is provided with support legs 239, and when the support legs 239 descend to make contact with the ground, the conveying device 23 stops moving), the first posts 216 continue to move relative to the bearing block without detaching from the bearing block. In this case, the floating device 25 moves independently of the conveying device 23.

The floating device 25 is mounted on the support device 21 in a suspended manner. Because of the connection relationship between the floating device 25 and the support device 21, the movement of the support device 21 in the second direction y causes the floating device 25 to move together with same. In addition, because the floating device 25 is connected to the support device 21 in a suspended manner, the floating device 25 can move in some directions or in any direction within a certain range relative to the support device 21 (i.e. the floating device 25 is movable, and the support device 21 is stationary). The basic requirement is that under the action of an external force, the floating device 25 at least can float in a plane perpendicular to the second direction *y*. Herein, what is called "floating" means omni-directional floating, and is neither limited to floating in a plane nor one-dimensional or two-dimensional floating, but may be floating in more directions within a small range, for example, slight three-dimensional movement or slight rotation in other directions. Such floating facilitates the adjustment of the position of the floating device 25 relative to the battery pack, and detailed description will be given below.

The floating device 25 and the support device 21 are spaced apart by a distance in the second direction y, and the floating device 25 is suspended on the support device 21. Specifically, the first top plate 212 of the support device 21 is provided with second posts 217 extending in the second direction *y*, and the entirety or part of the floating device 25 is suspended at the top of the second posts 217. According to the embodiments shown in the figures, without limitation, provided are four second posts 217 (in Fig. 3, limited by the image display, only one second post 217 is marked), the second posts are arranged in the center of the first top plate 212, every two second posts 217 are connected by a beam 218, a chain is suspended from the second posts 217 (or the beam 218), and the second posts 217 (or the beam 218) is connected to the floating device 25 by the chain. In addition, it should be contemplated that a locking device may further be disposed, to lock the floating device 25 relative to the support device 21 if necessary.

The floating device 25 comprises a second bottom plate 251 and a second top plate 252. The second bottom plate 251 is provided with a plurality of third posts 253 extending in the second direction y, and the third posts 253 are fixedly connected to the second top plate 252. Therefore, the second top plate 252 is stationary relative to the second bottom plate 251, and a space exists between the second top plate 252 and the second bottom plate 251. As mentioned above, the floating device 25 is suspended on the support device 21. According to the embodiments shown in the figures, without limitation, the second bottom plate 251 of the floating device 25 is connected to the first top plate 212 of the support device 21 by the chain suspended from the second posts 217 or the beam 218, and a clearance exists in the second direction y between the second bottom plate 251 and the first top plate 212. The space between the second bottom plate 251 and the second top plate 252 can be used to arrange the conveying device 23, and a battery locking/unlocking device 26 described below such as a torque gun, and a controller 27 of the torque gun, thus making the RGV of the application have a more compact structure. In addition, the shape of the second top plate 252 and the second bottom plate 251 is designed to prevent interference with the conveying device 23, so that the floating device 25 can ascend or descend relative to the conveying device 23. As shown in Fig. 3 (with reference to Fig. 1), the second top plate 252 is provided with two notches 259, the area of which substantially corresponding to the size of the roller array 231 so as to accommodate the roller array 231. When the second top plate 252 ascends or descends, the roller array 231 is exposed in the notch 259 and does not interfere with the second top plate 252.

The second top plate 252 is provided with pins 256 and a torque gun socket 257. A plurality of pins 256 are provided and arranged on the second top plate 252 corresponding to the positions of pin holes on the battery pack. The top of the pins 256 can be designed to be chamfered, rounded, tapered, or be other shapes that facilitate the insertion of the pins into the pin holes on the battery pack. A plurality of torque gun sockets 257 are also provided and arranged on the second top plate 252 corresponding to the positions of bolts on the battery pack, and the bolt is a bolt for fixing the battery pack to the vehicle. The number of the pins 256 and the torque gun sockets 257 depends on the number of pin holes and fixing bolts on the battery pack. The torque gun (which is the main body of the battery locking/unlocking device 26) is arranged below the second top plate 252, and is connected to the respective torque gun socket 257. The torque gun works to install and remove the bolts. The torque gun is electrically connected to and controlled by a plurality of torque gun controllers 27, and the torque gun controllers 27 are arranged in a row and fixed to one end of the conveying device 23 in the first direction *x*. The second bottom plate 251 is further provided with a plurality of fourth posts 254 extending in the second direction y. The fourth posts 254 are much thicker than the posts described above. The fourth posts 254 are each provided at the top with a pallet 255, which has a main load-bearing function for the battery pack. The second top plate 252 is provided with openings 258 for the fourth posts 254, particularly for the pallets 255, the pallets 255 of the fourth posts 254 extend through the openings 258 and beyond the second top plate 252, and the pallets 255 form a battery-bearing surface. The height of the pallet 255 is lower than the top of the torque gun socket 257, making it easy for the torque gun sockets 257 to extend into the battery. The pallets 255 are elastically connected to the fourth posts 254 by, for example, a spring, so that the pallets 255 can float to a certain extent in the horizontal direction relative to the fourth posts 254. The size of the opening 258 should not be too small, otherwise it would limit slight floating of the pallet 255.

In summary, the surface, in contact with the battery, of the roller array 231 is considered as a first surface a, and the second top plate is considered as a second surface b. At an initial position, the support legs 239 are on the ground, and the conveying device is at a lowermost position and is spaced apart from the first top plate 212 by a distance. In this case, the first surface a is higher than the second surface b so as to bear the battery. The first top plate 212 of the support device 21 begins to ascend, until the first top plate 212 makes contact with the bottom surface of the conveying device and the conveying device 23 is supported by the support device 21. When the support device 21 continues to ascend, the conveying device 23 moves along with the support device. In this case, the position of the second surface b is higher than that of the first surface c, and the floating device 25 can lock/unlock the battery.

In the descending process, at first, the second surface b is higher than the first surface a. The floating device 25, the conveying device 23 and the support device 21 descend together. They descend until the support legs 239 make contact with the ground, and then the conveying device 23 stops moving. The floating device 25 can continue to descend relative to the conveying device 23, until the conveying device 23 bears the battery. In this case, the first surface a is higher than the second surface b.

The battery swap executing mechanism may further be provided with a detection device for detecting and recording a lifting height of the support device. The detection device may be independently disposed on the support device or the floating device. Alternatively, as shown in the figures, a servo motor having a recording function is used as the rigid chain driven motor unit 214 of the support device 21. A controller 215 of the servo motor can record a lifting height of the scissor lift platform, and control the scissors to lift the first top plate 212 to the recorded height when the next lifting action is required.

The battery swap executing mechanism may further be provided with into-position switches 28 for determining whether the floating device already bears a battery pack. As shown in the figures, without limitation, the into-position switches 28 are disposed on the beam 218 of the first top plate 212, and the switches 28 can determine whether the floating device 25 already bears the battery by detecting an amount of elastic displacement of the pallets 255. The number of into-position switches 28 corresponds to the number of pallets 255.

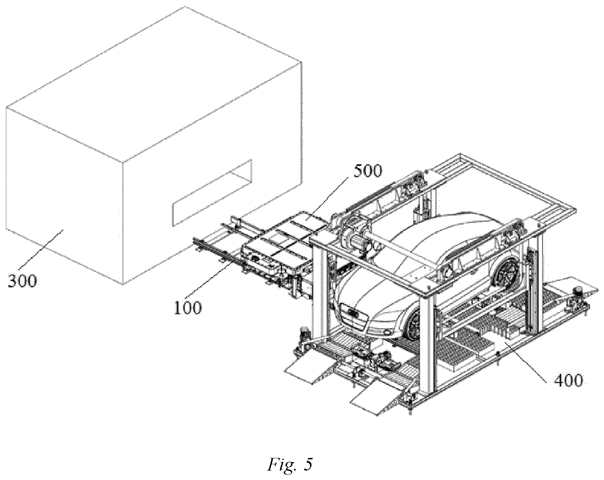

Referring to Figs. 3-5, a workflow of the RGV (rolling guide vehicle) of the application is as follows. 1) When there is no battery pack, the servo motor of the RGV 100 is started. A force output by the electric motor 112 drives, by means of the gear, the RGV 100 to move. By means of gear-rack transmission, the RGV moves along the rack 113 and walks on the track rails 111 until same enters the lifting station 400 to an area directly below a vehicle, the current position being a theoretically set position. In this case, the battery swap executing mechanism 20 of the RGV 100 is in an initial state (referring to Fig. 1), the support device 21 is at an initial position, and the height of the floating device 25 (i.e. the second surface b of the second top plate 252) is lower than the roller contact surface (the first surface a) of the conveying device 23.
2) The battery swap executing mechanism operates. Firstly, the support device 21 is driven by the rigid chain driven motor unit 214 to lift the first top plate 212, and in this case, the floating device 25 is lifted along with the first top plate 212, while the support legs of the conveying device 23 are on the ground. Because of a distance between the guide mechanisms 234 and the first post mounting surface of the first top plate 212, the first posts 216 move upward in the holes of the guide mechanisms 234, but the guide mechanisms 234 (i.e. the conveying device 23) keep still. The second surface b of the floating device 25 ascends to a position higher than the first surface a of the conveying device 23, until the first post mounting surface makes contact with the bottom of the guide mechanisms 234. Thus, a first lifting action is completed. An initial distance in height between the first post mounting surface and the bottom of the guide mechanisms 234 may be ensured, so as to ensure that when the second surface b is not higher than the conveying device 23, the first top plate 212 does not make contact with the bottom of the conveying device 23.
3) The battery swap executing mechanism performs a second lift. In this case, the support device 21 is lifted together with the conveying device 23 and the floating device 25, until same approach the battery pack. The pins 256 on the floating device 25 are aligned with pin holes on the battery pack. Because the pins 256 have a chamfered (tapered) top and the floating device 25 is able to float, the pins 256 can quickly enter the pin holes on the battery pack. After the pins 256 enter the pin holes, it indicates that the floating device 25 has aligned with the battery pack. In this case, the torque gun works, and the torque gun sockets 257 align with bolts on the battery pack and compress same by a certain stroke, until the pallets 255 begin to make contact with the battery pack below the vehicle body.
4) The battery swap executing mechanism performs a third lift. The pallets 255 of the floating device 25 lift the battery pack, until the into-position switches 28 judge and determine that the pallets 255 bear the battery pack. The rigid chain driven motor unit 214 of the battery swap executing mechanism records a lifting height for the next lift.
5) The floating device 25 is locked relative to the support device 21.
6) The torque gun works to loosen the fixing bolts on the battery pack. The battery pack 500 is separated from the vehicle.
7) The battery swap executing mechanism begins to descend. The rigid chain driven motor unit 214 is started, and the floating device 25 bearing the battery pack, the conveying device 23 and the support device 21 descend together, until the support legs 239 make contact with the ground. In this case, the floating device 25 bears the battery, and the second top plate 252 of the floating device 25 is higher than the roller contact surface (the first surface a) of the conveying device 23.
8) The support device 21 (the first top plate 212) and the floating device 25 continue to descend while the conveying device 23 keeps still, until the first top plate 212 descends to the initial position. When the bearer for the battery changes from the floating device 25 to the conveying device 23, the first surface a of the conveying device 23 is higher than the second surface b of the floating device 25. The torque gun operates, the sockets 257 are lowered and separated from the battery pack 500, and the pins 256 are also separated from the battery pack 500. The floating device 25 is unlocked and returns to the initial state.
9) The RGV 100 exits the lifting station 400 along the track rails 111.
10) The RGV 100 exchanges the swapped used battery pack with a fresh battery pack at the battery compartment 300.
11) The RGV 100 carrying the fresh battery pack enters the lifting station again to an area below the vehicle.
12) The battery swap executing mechanism performs a fourth lift. The support device 21 drives the floating device 25 to ascend to approach the battery pack 500, the pins 256 on the second top plate 252 of the floating device 25 are inserted into the pin holes on the battery pack again, and the torque gun sockets 257 align with the bolt holes on the battery pack. When the bearer of the battery pack 500 changes from the conveying device 23 to the floating device 25 as the floating device ascends, the second surface b of the floating device 25 is higher than the roller contact surface (the first surface a) of the conveying device 23. The into-position switches 28 determine, according to an amount of displacement of the spring below the pallets 255, whether the pallets bear the battery pack.
13) The battery swap executing mechanism performs a fifth lift. The first post mounting surface of the first top plate 212 of the support device 21 makes contact with the guide mechanisms 234 of the conveying device 23. The support device 21, the floating device 25 bearing the battery pack, and the conveying device 23 are lifted together. The floating device 25 is locked relative to the support device 21.
14) The battery swap executing mechanism performs a sixth lift. According to the recording of the rigid chain driven motor unit 214, the floating device 25 is lifted to the recorded height. At this height, the battery pack 500 is in contact with the bottom of the vehicle.
15) The torque gun works to tighten fixing bolts onto the battery pack 500.
16) The RGV 100 descends in a stepped manner and returns to the initial position, and the floating device 25 is unlocked.
17) The RGV 100 exits the lifting station 400.

Although specific embodiments of the application have been illustrated and described in detail to explain the principles of the application, it should be understood that the application can be implemented in other manners without departing from such principles.

## Claims

1. A battery swap system, **characterized by** comprising a battery swap executing mechanism, the battery swap executing mechanism comprising:
an elevatable support device (21);
a conveying device (23) for battery exchange, the conveying device having a first surface for making contact with a battery; and
a floating device (25) having a second surface provided with a battery locking/unlocking device, the floating device (25) being mounted on the support device (21) in a suspended manner and being able to at least horizontally float relative to the support device, wherein
the floating device (25) has a space for elevation relative to the conveying device (23), such that the first surface is higher than the second surface when the conveying device (23) makes contact with the battery, and the second surface is higher than the first surface when the floating device (25) locks/unlocks the battery.

2. The battery swap system according to claim 1, **characterized in that** the support device (21) comprises a first elevatable top plate (212), the floating device (25) comprises a second bottom plate (251) and a second top plate (252) fixed on the second bottom plate (251), and the second bottom plate (251) is suspended on the first top plate (212); and the conveying device is disposed between the second bottom plate (251) and the second top plate (212) in an elevation direction, and the second top plate (212) serves as the second surface.

3. The battery swap system according to claim 2, **characterized in that** the conveying device (23) comprises at least one roller array, the roller array being formed by a plurality of pivotable rollers; and a notch (259) exposing the roller array is provided on the second top plate (252) at a position corresponding to the roller array, and when the floating device (25) ascends or descends relative to the conveying device (23), the roller array switches between a state of being higher than the second top plate (252) and a state of being lower than the second top plate (252) by means of the notch (259).

4. The battery swap system according to claim 2, **characterized in that** the battery locking/unlocking device is a torque gun device, which comprises a torque gun and a socket driven by the torque gun to rotate, wherein the torque gun is disposed on the side of the second top plate (252) that faces the second bottom plate (251) and protrudes out of the second top plate, and the socket is fixed to the side of the second top plate (252) that faces away from the second bottom plate and is in transmission connection with the torque gun.

5. The battery swap system according to claim 2, **characterized in that** the conveying device (23) has a bottom surface facing the first top plate (212) and support legs (239) provided on the bottom surface, and the first top plate (212) is elevatable relative to the bottom surface;
when the support device (21) is at a lowermost position, the conveying device (23) is supported on the support device by means of the support legs (239), so that the first top plate (212) is separated from the bottom surface, and then the first surface is higher than the second surface; and
when the support device (21) ascends, the first top plate (212) ascends along with the support device (21) until making contact with the bottom surface so as to drive the conveying device (23) to ascend synchronously, and then the second surface is higher than the first surface.

6. The battery swap system according to claim 2, **characterized in that** the first top plate (212) is provided with first posts (216), the conveying device (23) is provided with guide mechanisms (234), the guide mechanisms (234) provide holes for the first posts (216) to pass through, the first posts (216) move in the holes when the floating device (25) ascends or descends relative to the conveying device (23), and the first posts (216) stand still relative to the holes when the conveying device (23) ascends or descends along with the floating device (25).

7. The battery swap system according to claim 2, **characterized in that** the first top plate (212) is provided with second posts (217), and the second bottom plate (251) is suspended on the second posts (217), so that the floating device (25) floats relative to the battery when the floating device (25) is calibrated to be in a position relative to the battery.

8. The battery swap system according to claim 2, **characterized in that** a space exists between the second bottom plate (251) and the second top plate (252), the second bottom plate and the second top plate are connected by third posts (253) therebetween, and a controller (27) for controlling the battery locking/unlocking device is located in the space.

9. The battery swap system according to claim 2, **characterized in that** the second bottom plate (251) is provided with fourth posts (254), the fourth posts (254) are each provided at the top with a pallet (255), the second top plate (252) is provided with openings for the pallets (255) to pass through, and the pallets (255) are configured to be at least partially higher than the second top plate (252).

10. The battery swap system according to claim 9, **characterized in that** the pallets (255) are elastically connected to the fourth posts (254), so that the pallets (255) float in a horizontal direction relative to the fourth posts (254) and the openings (258).

11. The battery swap system according to claim 10, **characterized in that** the battery swap system further comprises into-position switches (28) for detecting an amount of elastic displacement of the pallets (255) bearing a battery.

12. The battery swap system according to claim 1, **characterized in that** the support device (21) is driven by a rigid chain driven motor unit (214) arranged outside the battery swap system, and the rigid chain driven motor unit (214) is a servo motor which records a lifting height of the support device (21) bearing a battery after the floating device (25) is positionally calibrated, for the next lift of the support device (21).

13. The battery swap system according to claim 1, **characterized in that** the battery swap system further comprises at least one track rail (111) and a walking mechanism (10) along with which the battery swap executing mechanism (20) moves, and the walking mechanism (10) movably walks on the track rail (111) by means of a bearing.

14. The battery swap system according to claim 13, **characterized in that** the walking mechanism (10) further comprises a driving member and a transmission device connected to the driving member, the transmission device comprising a gear and a rack which mesh with each other, the gear being disposed on the battery swap trolley, and the rack (113) being disposed on the track rail (111) and arranged to be substantially parallel to the track rail (111).
